# EUROPÄISCHE PATENTSCHRIFT

(11) **EP 1 098 693 B1**
(45) Veröffentlichungstag und Bekanntmachung des Hinweises auf die Patenterteilung: **08.10.2003**
(21) Anmeldenummer: 99934570.5
(22) Anmeldetag: 05.07.1999
(51) Int. Cl.: B01D 47/10, B05B 17/06, B05B 7/04

(54) **VERFAHREN UND VORRICHTUNG ZUR NASSREINIGUNG VON ROHRGASSTRÖMEN**
METHOD AND DEVICE FOR LIQUID PURIFICATION OF CRUDE GAS FLOWS
PROCEDE ET DISPOSITIF POUR L'EPURATION PAR VOIE HUMIDE DE COURANTS DE GAZ BRUT

(30) Priorität: 17.07.1998 DE 19832174
(43) Veröffentlichungstag der Anmeldung: 16.05.2001
(73) Patentinhaber: BAYER AG, 51368 Leverkusen (DE)
(72) Erfinder: LISTNER, Uwe, D-50354 Hürth (DE); SCHWEITZER, Martin, D-51383 Leverkusen (DE)
(86) Internationale Anmeldenummer: EP9904653
(87) Internationale Veröffentlichungsnummer: WO00003788

(56) Entgegenhaltungen:
- WO-A-94/08700
- WO-A-96/14139
- DE-A- 4 315 385

## Beschreibung

Verfahren und Vorrichtung zur Naßreinigung von Rohgasströmen, bei dem der Rohgasstrom durch eine Venturikehle strömt, die durch eine periodisch pulsierende Hybriddüse mit einer Waschflüssigkeit besprüht wird.

Zur Naßreinigung von Rohgasströmen werden häufig Venturiwäscher verwendet (US-A-4,152,126, und US-A-4,193,778). Sie bestehen aus einem Strömungsrohr mit einer Verengung, der Venturikehle, und einer über oder in der Kehle angeordneten Zufiihrvorrichtung für die Waschflüssigkeit in Form einer Druckdüse.

Staub kann so bis zu Partikelgrößen von 0,1 µm gebunden werden. Die Staubabscheidung erfolgt in drei Phasen: 1. Die Teilchen treffen auf die Flüssigkeitsoberfläche, 2. sie bleiben an der Flüssigkeitsoberfläche haften, 3. die Tropfen der Flüssigkeit werden abgeschieden.

Gegenstand dieser Erfindung ist eine Verbesserung der Staubabscheidung durch eine Verbesserung der Phase 1. Phase 2 ist unproblematisch, da bei der Berührung des Flüssigkeitstropfens mit dem Staubkorn immer mit einer Anlagerung gerechnet werden kann. Die Phase 3 erfolgt in einem separaten Flüssigkeitsabscheider, z.B. in einem Zyklon.

Die Abscheidung der Staubkörner in Phase 1 auf den Flüssigkeitstropfen erfolgt hauptsächlich durch Trägheitsabscheidung an schnell fliegenden Tropfen. Die Trägheitabscheidung wird umso besser, je größer die Relativgeschwindigkeit zwischen Tropfen und Staubkorn und je kleiner der Tropfendurchmesser ist.

In einem Venturi mit konventioneller Bedüsung werden je nach Art der verwendeten Düse (Einstoffdüse, Zweistoffdüse oder Dralldüse) und Düsenvordruck Tropfen mit einem Größenspektrum von 30 -2000 µm erzeugt. Diese Tropfen haben in Düsennähe alle die gleiche Anfangsgeschwindigkeit, die je nach Düsendruck im Bereich von 3-50 m/sec liegt. In der Venturikehle werden diese relativ großen Tropfen infolge der hohen Gasbeschleunigung und der Scherströmung in der Venturikehle in feinste Tröpfchen zerrissen und durch Turbulenzen verwirbelt. Die nunmehr kleinen Tröpfchen und die hohe Geschwindigkeitsstreuung der Tröpfchen in Betrag und Richtung relativ zum Gasstrom erlauben das Zusammentreffen vieler Staubpartikel mit einer Flüssigkeitsoberfläche, was zu einer hohen Abscheideleistung von Staub auf der Flüssigkeitsoberfläche führt. Die Abscheidung der staubbeladenen Flüssigkeitströpfchen als Kondensat erfolgt dann in einem Flüssigkeitsabscheider. Die Abscheideleistung wird gemessen als Verhältnis von Gehalt der abzuscheidenden Bestandteile im Reingas nach der Naßreinigung und im Rohgas vor der Naßreinigung.

Die Abscheideleistung hängt bei den Venturiwäschern mit konventioneller Bedüsung davon ab, in welchem Maß die Tropfen der Waschflüssigkeit in der Venturikehle zerstäubt und mit dem Rohgas verwirbelt werden, so daß möglichst viele Staubpartikel auf die Flüssikgeitsoberflächen treffen und abgeschieden werden. Die Scherkräfte und der Grad der Verwirbelung des Rohgas- Flüssigkeitsgemischs in der Venturikehle nimmt mit der Größe der Venturikehle ab. Die Größe der Venturikehle und die Geschwindigkeit des Rohgasstroms ergeben den Venturidruckverlust des Rohgasstroms. Der Druckverlust steigt mit Verkleinerung der Venturikehle und Vergrößerung des Rohgasstroms. Die Abscheideleistung steigt mit zunehmendem Venturidruckverlust.

Nachteilig an allen bekannten Venturiwäschern ist, daß nur ein hoher Venturidruckverlust zu einer guten Abscheideleistung führt. Typische Venturiwäscher werden ab 20-30 mbar Druckverlust bis zu 150 mbar Druckverlust betrieben. Ein hoher Druckverlust bedeutet einen hohen Energiebedarf, um die benötigte Pumpleistung für den Rohgasstrom zu erreichen.

Es ist außerdem nachteilig, daß sich bei einer Änderung des Rohgasdurchsatzes bei fester Größe der Venturikehle wegen der veränderten Geschwindigkeit des Rohgases der Venturidruckverlust ändert. In DE-A-43 31 301 wird ein Rohrspalt-Venturiwäscher beschrieben, der deshalb zwei einstellbare Venturikehlen hat. Der Rohrspalt-Venturiwäscher weist einen Rohrspalt mit in etwa rechteckigem Querschnitt auf. Stromabwärts hinter diesem Rohrspalt oberhalb des Wäschersumpfes ist ein Verdrängerkörper angeordnet, der sich über die gesamte Spaltlänge erstreckt und auf den Rohrspalt zu und von diesem weg verschiebbar gelagert ist. Zwischen den Wänden des Rohrspaltes und der Verdrängerwand entstehen zwei parallel verlaufende Venturikehlen. Durch Verschieben des Verdrängerkörpers sind die Querschnitte dieser beiden Venturikehlen einstellbar. Als Zuführvorrichtung für die Waschflüssigkeit werden Dralldüsen vorgeschlagen.

Der Nachteil an dieser Lösung zur Steuerung des Druckverlustes ist, daß sie der mechanischen Abnutzung unterliegt und die Verstelleinrichtung insbesondere durch den Sumpf unterhalb der Venturikehlen geführt werden muß, was zu Abdichtungsproblemen führt.

Aufgabe der Erfindung ist es hohe Abscheideleistungen in einem Venturiwäscher ohne oder bei niedrigen Druckverlusten zu erreichen und eine einfache Möglichkeit der Steuerung der Abscheideleistung bereitzustellen. Eine solche Steuerung ist insbesondere bei Nachrüstmaßnahmen, die zu einem höheren Gasdurchsatz führen, notwendig.

Die Lösung der erfindungsgemäßen Aufgabe besteht in einem Verfahren und einer Vorrichtung zur Reinigung eines Rohgasstroms mit Hilfe einer zerstäubten Waschflüssigkeit.

Nach dem erfindungsgemäßen Verfahren wird der Rohgasstrom durch eine Hybriddüse mit der zerstäubten Waschflüssigkeit besprüht und anschließend mit einem Druckverlust bis 30 mbar, bevorzugt bis zu 20 mbar, durch eine oder mehrere Venturikehlen geleitet. Eine Hybriddüse ist an sich aus DE-A-43 15 385 bekannt.

Eine Hybriddüse wird konstant mit einer Waschflüssigkeit und einem Gas als Zerstäubungshilfsmittel beaufschlagt. Die Flüssigkeits- und Gaszuführungen sind mit einer ersten Resonanzkammer verbunden, der über eine Blende mindestens eine weitere Resonanzkammer nachgeschaltet ist. Die in Strömungsrichtung gesehen letzte Resonanzkammer ist mit der Austrittsöffnung der Hybriddüse verbunden.

Als Zerstäubungshilfsmittel kann beispielsweise Luft oder Inertgas verwendet werden.

Die Hybriddüse kann sowohl den Betriebsmodus einer Druckdüse als auch den Betriebsmodus einer Zweistoffdüse annehmen. Das kennzeichnende an der Hybriddüse ist, daß sie bei konstanter Beaufschlagung mit einer bestimmten Flüssigkeitsmenge und einer bestimmten Luftmenge, diese Flüssigkeitsmengen und Luftmengen nicht gleichmäßig verdüst, sondern pulsierend den Betriebsmodus ständig wechselt.

Im Druckdüsenbetrieb werden fortwährend Tropfen mit einem relativ großen mittleren Tropfendurchmesser erzeugt. Der mittlere Tropfendurchmesser wird im wesentlichen von der Größe der Austrittsöffnung der Düse bestimmt. Die Reichweite eines Tropfens wird bestimmt durch seinen Anfangsimpuls. Die Anfangsgeschwindigkeit der Tropfen ist für alle Tropfen gleich. Wegen ihrer höheren Masse haben die großen Tropfen einen höheren Anfangsimpuls und deshalb eine höhere Reichweite. 99 % der verdüsten Flüssigkeitsmenge wird durch Tropfen gebildet, deren Durchmesser sich bis zu einem Verhältnis von 1:20 voneinander unterscheiden.

Eine Zweistoffdüse unterscheidet sich von einer Druckdüse dadurch, daß sie zusätzlich mit Luft beaufschlagt wird. Es werden fortwährend Tropfen mit einem im Vergleich zur Druckdüse kleinen mittleren Tropfendurchmesser erzeugt. Der mittlere Tropfendurchmesser wird durch das Mengenstromverhältnis von Zerstäuberluft zu Flüssigkeit in der Düse bestimmt und sinkt mit zunehmender Zerstäuberluftmenge. Die Reichweite eines Tropfens wird durch den Impuls der Zerstäuberluft und den Übertrag dieses Impulses auf einen ganzen Tropfenschwarm bestimmt. Wie bei der Druckdüse werden 99 % der verdüsten Flüssigkeitsmenge durch Tropfen gebildet, deren Durchmesser sich bis zu einem Verhältnis von 1:20 voneinander unterscheiden.

Der pulsierende Wechsel des Betriebsmodus bei der Hybriddüse kann abhängig von der Pulsationsfrequenz stattfinden zwischen dem Druckdüsenmodus und einem Zweistoffmodus oder zwischen verschiedenen Zweistoffmodi, die sich durch die Menge der beaufschlagten Zerstäuberluft unterscheiden.

Der pulsierende Wechsel des Betriebsmodus bei zeitlich konstanter Beaufschlagung der Hybriddüse mit Druckluft und Flüssigkeit wird aufgrund periodischer Anlaufvorgänge in der Hybriddüse selbst erzeugt (Autopulsation).

Die Pulsation, findet mit einer Frequenz von vorzugsweise 5 bis 70 Hz, besonders bevorzugt von 10 bis 20 Hz statt. Die Frequenz wird bestimmt durch das Verhältnis der Größe der ersten Resonanzkammer in Strömungsrichtung hinter dem Punkte, an dem die Flüssigkeit in die erste Resonanzkammer eintritt, zur Größe der zweiten Resonanzkammer. Durch Änderung des Eintrittspunktes der Flüssigkeit in die erste Resonanzkammer kann das Volumen dieser Resonanzkammer in Strömungsrichtung, und damit die Frequenz variiert werden. Je kleiner das Volumen der ersten Resonanzkammer in Strömungsrichtung im Verhältnis zur Größe der zweiten Resonanzkammer ist, desto höher wird die Pulsationsfrequenz.

Durch den pulsierenden Austritt aus der Hybriddüse wird eine breites Spektrum von Tropfengrößen und Tropfengeschwindigkeiten erzeugt. Auch gleichgroße Tropfen können stark differierende Geschwindigkeiten haben, ganz im Gegensatz zu den konventionellen Düsen. Im Wechseltakt wird ein Sprühkegel mit groben Tropfen mit großem mittleren Tropfendurchmesser und großer Reichweite und ein Sprühkegel mit feinen Tropfen mit kleinem mittleren Tropfendurchmesser und kleiner Reichweite erzeugt. Das erzeugte Tropfenspektrum umfaßt Großenverhältnisse von Tropfen von bis zu 1:1000.

Die Anteile von Flüssigkeit und Luft im austretenden Sprühstrahl ändert sich bei kleinen Pulsationsfrequenzen bis etwa 20 Hz periodisch zwischen den Extremwerten 0 % bis 100 % Flüssigkeitsanteil. Mit höheren Pulsationfrequenzen wird die Amplitude kleiner bis sich der Flüssigkeitsanteil im Bereich von 70 Hz nur noch zwischen 45 % und 55 % periodisch ändert.

Es stellt sich durch die Pulsation kein stationärer Verdüsungszustand ein, so daß im Sprühstrahl lokal immer Anlaufströmüngen vorhanden sind. Dadurch werden die Tröpfchenzerkleinerung und die Turbulenzen schon zwischen der Vorrichtung für die Zuführung der Waschflüssigkeit und der Venturikehle erreicht und nicht erst in der Venturikehle. Damit hat die Größe der Venturikehle und der davon abhängige Venturidruckverlust kaum noch Einfluß auf die Abscheideleistung und der Venturiwäscher kann ohne Druckverlust in der Venturikehle betrieben werden. Die Venturikehle dient nicht mehr zur Zerkleinerung und Verwirbelung der Tröpfchen. Das durch die Hybriddüse erzeugte Spektrum an Tröpfchengrößen, Tröpfchengeschwindigkeiten und Tröpfchenformen führt zu einer besonders effektiven Staubabscheidung in der Venturikehle.

Die Abscheideleistung in einer Venturikehle kann bei konstanter Beaufschlagung der Hybriddüse mit Flüssigkeit durch die zugeschaltete Menge an Druckluft in der Hybriddüse und durch die Pulsationsfrequenz gesteuert werden.

Die in die Hybriddüse beaufschlagte Menge an Verdüsungsluft für eine bestimmte Wassermenge ist proportional zu dem damit in die Hybriddüse induzierten spezifischen Energieeintrag (Verdüsungsenergie). Der Energieeintrag kann durch Variation der in die Hybriddüse eingespeisten Verdüsungsluftmenge auf einen Wert im Bereich von 0,5 kWh/1000 m³ Gas bis 50 kWh/1000 m³ Gas vorzugsweise 1 kWh/1000 m³ Gas bis 30 kWh/1000 m³ Gas eingestellt werden.

Die crfindungsgemäße Vorrichtung besteht aus aus einem Strömungsrohr in dem sich eine oder mehrere Venturikehlen befinden und eine oder mehrere Hybriddüsen, die stromaufwärts der Venturikehlen angeordnet sind. Der Abstand der Hybriddüsen zu der oder den Venturikehlen kann einstellbar sein. Der Abstand zwischen Hybriddüse und Venturikehlen kann in Bezug auf die erzielte Abscheideleistung optimiert werden.

Der Abstand zwischen dem Düsenaustritt und der Mitte einer stromabwärts liegenden Venturikehle kann so gewählt werden, daß die Fläche der unter der Hybriddüse liegenden Venturikehle vom Sprühstrahl der Hybriddüse überdeckt ist, bevorzugt zu 110%.

Bei einer bevorzugten Ausführungsform der erfindungsgemäßen Vorrichtung werden die eine oder mehrere Venturikehlen durch mindestens zwei parallele Zylinder gebildet, die horizontal in einer Ebene nebeneinander angeordnet sind und bei der jeder Kehle jeweils mindestens eine Hybriddüse zugeordnet ist. Besonders bevorzugt werden die Venurikehlen durch die parallelen Zylinder in Verbindung mit einem oder mehreren Verdrängerkörpem gebildet, die stromabwärts der parallelen Zylinder angeordnet sind. Die Verdrängerkörper können axial beweglich sein.

Ein Meßsystem am Ausgang des dem Venturi nachgeschalteten Tropfenabscheiders zur Abscheidung der staubbeladenen Wassertropfen kann die Druckluftmenge und die Pulsationsfrequenz in der Hybriddüse in Abhängigkeit vom Abscheidegrad steuern.

Vorteil des erfindungsgemäßen Verfahrens ist, daß eine einfache Steuerung der Abscheideleistung durch Steuerung der Gasmenge und der Frequenz in der Hybriddüse erfolgen kann. Die Gefahr der Verstopfung des Venturiwäschers durch einen engen Venturispalt, wie er für hohe Abscheideleistungen mit konventionellen Venturiwäschern benötigt wird, besteht nicht. Auch in der Hybriddüse selbst besteht keine Gefahr der Anlagerung von Feststoffen auf Grund der Pulsation.

Die Menge der benötigten Waschflüssigkeit gegenüber den konventionellen Systemen ist deutlich herabgesetzt.

Überraschenderweise liegt die Abscheideleistung, die sich mit dem erfindungsgemäßen Venturiwäscher mit der Hybriddüse ergibt, im Vergleich deutlich höher als mit konventioneller Bedüsung.

Der erfindungsgemäße Venturiwäscher mit Hybriddüse kann für die Naßentstaubung von staubbeladenem Abgas oder zur Abscheidung von SO₂ und anderer gasförmiger Komponenten aus Abgasen verwendet werden.

### Beispiele und Zeichnungen

Im folgenden wird die Erfindung anhand von Zeichnungen und Ausführungsbeispielen näher beschrieben.

Es zeigen:
- Fig. 1: Hybriddüse mit schematisiert dargestellter, charakteristischer Zerstäubung.
- Fig. 2: Perspektivische Ansicht eines Rohrspalt-Venturiwäschers mit nachgeschaltetem Zyklon.
- Fig. 3: Fließschema der Versuchsanordnung zur Naßentstaubung mit dem Venturiwäscher.
- Fig. 4: Ausschnitt des Strömungsrohres eines Rohrspalt-Venturiwäschers mit konventioneller Druckdüse.
- Fig. 5: Ausschnitt des Strömungsrohres eines Rohrspalt-Venturiwäschers mit Hybriddüse.
- Fig. 6: Abhängigkeit der Staubabscheideleistung vom Druckverlust im Venturiwäscher für Druckdüse und Hybriddüse.
- Fig. 7: Abhängigkeit der Staubabscheideleistung von der Verdüsungsenergie im Venturiwäscher mit Hybriddüse.
- Fig. 8: Rohrspalt-Venturiwäscher mit acht Venturikehlen.
- Fig. 9: Abhängigkeit der Staubabscheideleistung vom Druckverlust im Venturiwäscher für Druckdüse und Hybriddüse mit dem Wäscher mit acht Venturikehlen.
- Fig. 10: Fließschema der Versuchsanordnung zur SO₂-Absorption mit dem Venturiwäscher.

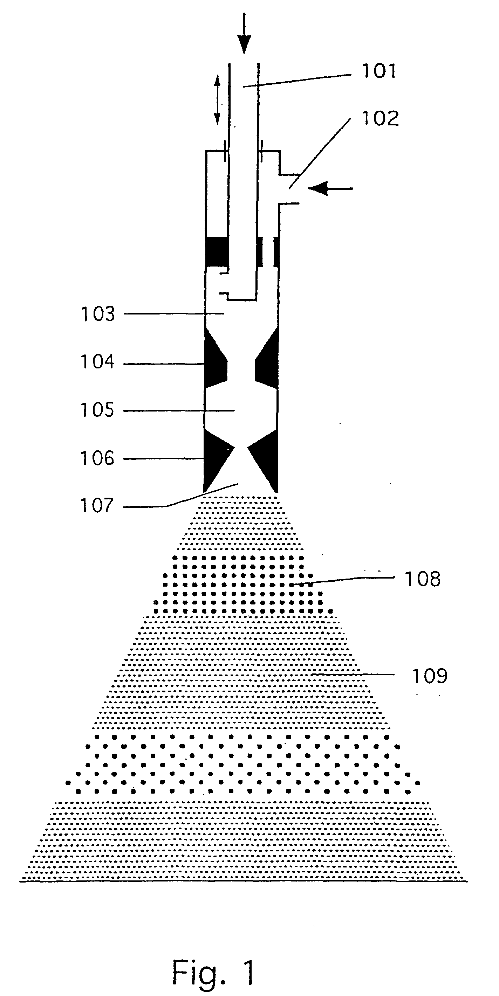

Fig. 1 zeigt eine Hybriddüse. Die Hybriddüse wird durch das Flüssigkeitsverteilerrohr 101 mit der Waschflüssigkeit beaufschlagt. Die Flüssigkeit wird in den ersten Resonanzraum 103 eingeleitet. Der erste Resonanzraum 103 ist in seiner Größe durch das relativ zum Außenrohr der Hybriddüse bewegliche Flüssigkeitsverteilerrohr 101 variabel. Das Zerstäubungshilfsmittel z.B. Preßluft oder Dampf wird durch die Zuführung 102 eingespeist und ebenfalls in den Resonanzraum 103 geführt. Durch die Blende 104 abgetrennt befindet sich hinter dem ersten Resonanzraum 103 der zweite Resonanzraum 105. Der zweite Resonanzraum 105 hat eine feste Größe. Hinter dem zweiten Resonanzraum 105 befindet sich durch die Blende 106 abgetrennt der Sprühkopf 107. Die Zerstäubung mit der Hybriddüse ist schematisch angedeutet. Grober Sprüh 108 wird periodisch wechselnd mit feinem Sprüh 109 erzeugt.

### Beispiel 1:

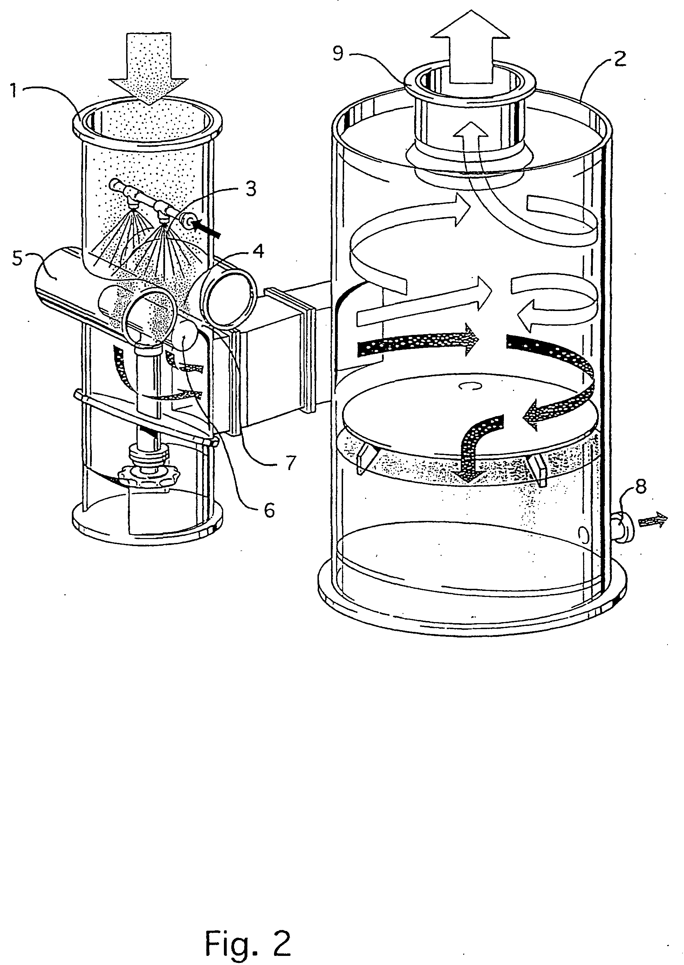

Zum Vergleich der Abscheideleistung eines konventionellen und eines erfindungsgemäßen Venturiwäschers, wurde ein Wäscher mit zwei einstellbaren Venturikehlen verwendet, der für einen Nenndurchsatz von 150m³/h Abluft konzipiert worden war. Fig. 2 zeigt eine perspektivische Ansicht eines solchen Venturiwäschers 1 mit nachgeschaltetem Zyklon zur Wasserabscheidung 2 und einer konventionellen Wasserbedüsung 3. Der etwa rechteckige Rohrspalt 4 wird von zwei Zylindern 5 gebildet.

Unter dem Rohrspalt ist ein Verdrängerkörper 6 angeordnet, der sich über die gesamte Spaltlänge erstreckt und auf den Rohrspalt 4 zu und von diesem weg verschiebbar gelagert ist. Zwischen den Wänden der Zylinder 5 und der Wand des Verdrängers 6 entstehen die beiden parallel nebeneinander verlaufenden Venturikehlen 7. Das Reingas verläßt zusammen mit dem Wassernebel den Venturiwäscher und gelangt in den Zyklon 2, wo das Wasser abgeschieden und über den Wasserablauf 8 abgeführt wird und das gereinigte Gas über den Ausgang 9 den Zyklon verläßt.

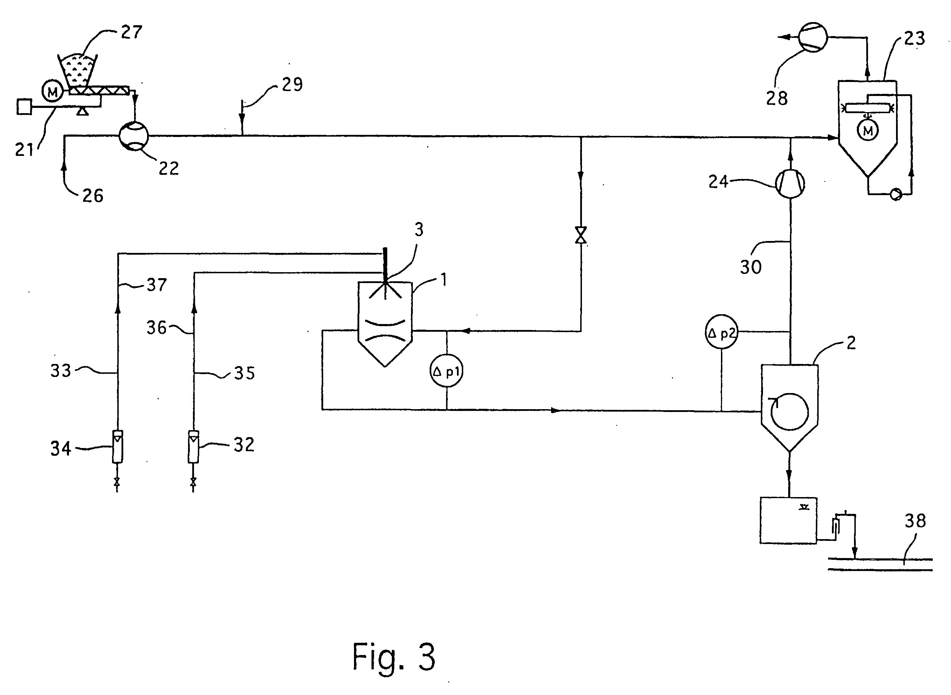

Fig. 3 zeigt ein Fließschema des Versuchsaufbaus.
Mit dem Ventilator 28 wurden 2000 m³/h Raumluft 29 angesaugt. In diese Raumluft wurde ein Staub-Luft-Gemisch eingespeist, wobei der Staub mittels Dosierwaage 21 gravimetrisch in einen mit Treibluft 26 gespeisten Injektor 22 dosiert wurde. Als Teststaub 27 wurde Sillitin Z 86 weiß (Siliziumdioxid) mit einem mittleren Korndurchmesser von 1.7 µm verwendet. Mit Hilfe des Gebläses 24 wurde ein Teilstrom des aus Raumluft und Staub-Luft-Gemisch gebildeten Rohgases entnommen und mit einem Unterdruck bis zu max. 100 mbar durch den Venturiwäscher 1 gesaugt. Im Venturiwäscher wurde die Düse 3 durch die Zuführung 36 mit Wasser beaufschlagt. Als Waschwaser wurde Betriebswasser mit einem Salzgehalt von 500 mg/l verwendet. Volumen und Druck des zugeführten Wassers wurden mit den Meßgeräten 32 und 35 gemessen. Die Hybriddüse wurde zusätzlich mit Preßluft aus der Zuführung 37 beaufschlagt, wobei Druck und Volumen über die Meßgeräte 33 und 34 gemessen wurden. Der Venturidruckverlust wurde mit dem Meßgerät Δp₁ und der Druckverlust am Zyklon mit dem Meßgerät Δp₂ bestimmt.

Die Waschflüssigkeit wurde zusammen mit dem abgeschiedenen Staub im Zyklon 2 in den Abwasserkanal 38 geleitet und das gereinigte Gas zusammen mit dem Rohgas über den einstufigen Rotationswäscher 23 dem hauseigenen Abluftsystem zugeführt.

Zur kontinuierlichen Messung des Reingas-Staubgehalts wurde ein Streulicht-Photometer 30 der Fa. Sigrist am Ausgang des Zyklons verwendet.

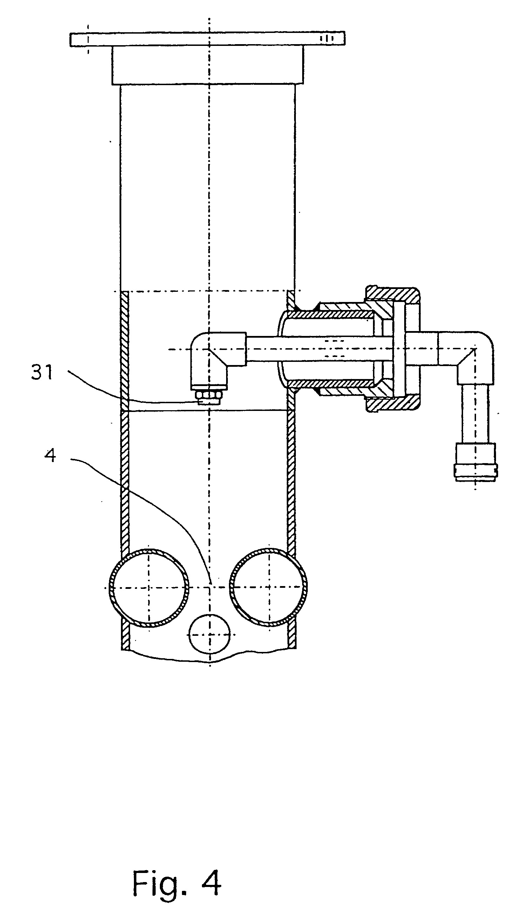

Fig. 4 zeigt einen Ausschnitt des Strömungsrohres eines Rohrspalt-Venturiwäschers mit einer konventionelle Druckdüse (Nr. 460.683 der Fa. Lechler) 31, die oberhalb des Rohrspalts 4 angeordnet ist. Die Druckdüse hat ein Vollkegelsprühbild mit einem Sprühwinkel von 45 Grad. Die Plazierung im Anströmrohr wurde so gewählt, daß im Bereich des Rohrspaltes der gesamte Rohrquerschnitt benetzt wurde. Die Durchsatzleistung der Düse bei 3 bar Druckabfall betrug 353 l/h Wasser. Der mittlere Tropfendurchmesser im Sprüh dieser Druckdüse lag bei 270 µm bei einem Wasserdurchsatz von 280 l/h.

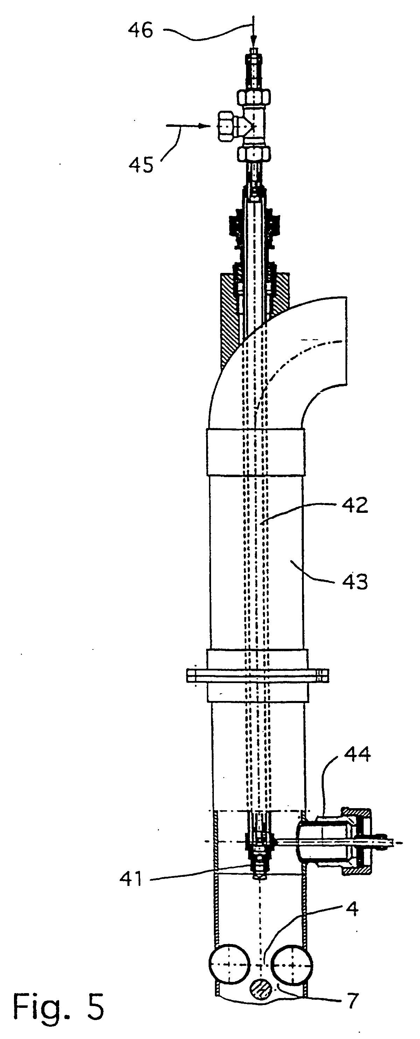

Fig. 5 zeigt einen Ausschnitt des Strömungsrohres 43 eines Rohrspalt-Venturiwäschers mit einer Hybriddüse 41, die oberhalb des Rohrspalts 4 angeordnet ist. Die Hybriddüse 41 sitzt an einer Zerstäubungslanze 42 achsmittig im Strömungsrohr 43. Der Abstand zum Rohrspalt ist veränderbar und die Position der Düse in bezug auf die Rohrwände des Strömungsrohres kann durch einen Zentrierstab 44 eingestellt werden. Das Preßluft kann über die Öffnung 45 und die Flüssigkeit über die Öffnung 46 zugeführt werden. Die Hybriddüse erzeugt ein Fächersprühbild in Form eines schmalen Rechtecks. Der Sprühwinkel zwischen den Breitseiten des Rechtecks beträgt 18 Grad und zwischen den Schmalseiten je nach verwendeter Düse zwischen 40 bis 160 Grad, wobei die beste Abscheideleistung bei 160 Grad erzielt wurde. Der Abstand vom Rohrspalt war so eingestellt, daß der Spalt zu 110 % vom Sprüstrahl überdeckt wurde.

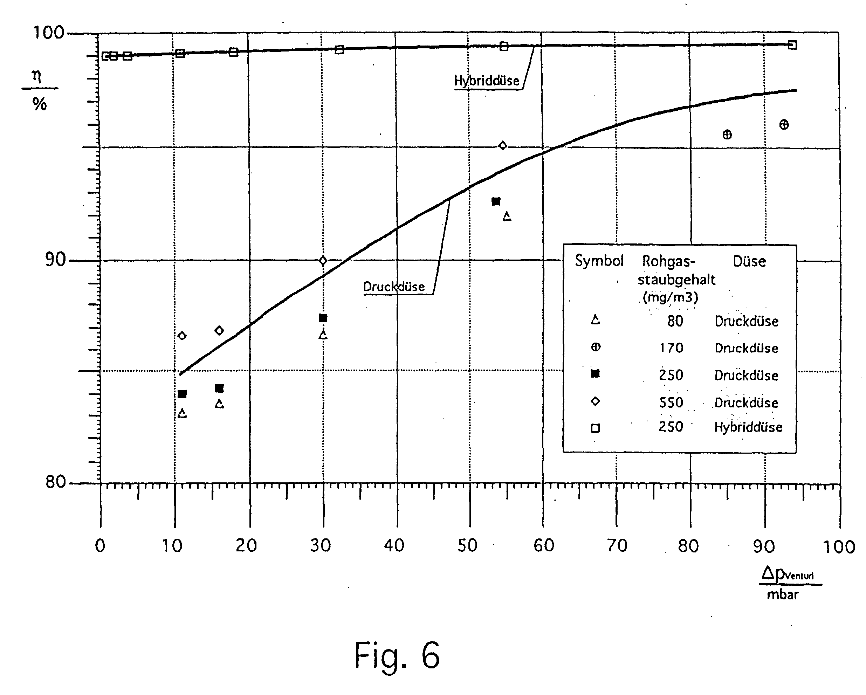

Fig. 6 zeigt die gemessene Abhängigkeit der Staubabscheideleistung η in % vom Druckverlust im Venturi Δpᵥₑₙₜᵤᵣᵢ und vom Rohgasstaubgehalt bei einem Rohgasdurchsatz von 100 m³/h, einem Wasserdurchsatz an der Druckdüse von V_{WD}=280 l/h und einem Wasserdurchsatz an der Hybriddüse von V_{WZ}=150 l/h. Die Abscheideleistung mit der Druckdüse steigt mit zunehmendem Venturi-Druckverlust stark an, während die Abscheideleistung mit der Hybriddüse nur geringfügig abhängig vom Venturi-Druckverlust ist.

Die absoluten Abscheideraten bei einem Rohgasstaubgehalt von 250 mg/m³ liegen für die Druckdüse bei 84 % bei 11 mbar Venturi-Druckverlust und bei 92,5 % bei 54 mbar Druckverlust.

Bei demselben Rohgasstaubgehalt erreicht die Hybriddüse im gesamten Druckverlustbereich von 1 bis 93 mbar eine Abscheideleistung von 99 bis 99,5 %. Dabei beträgt die benötigte Wassermenge bei der Druckdüse mit 280 l/h fast das Doppelte der mit der Hybriddüse benötigten Wassermenge von 150 l/h.

Bei höheren Rohgasstaubgehalten von z.B. 550 mg/m³ liegen die Abscheideraten mit der Druckdüse insgesamt etwas höher, erreichen aber bei weitem nicht die Abscheideleistung die mit der Hybriddüse erzielt wurde.

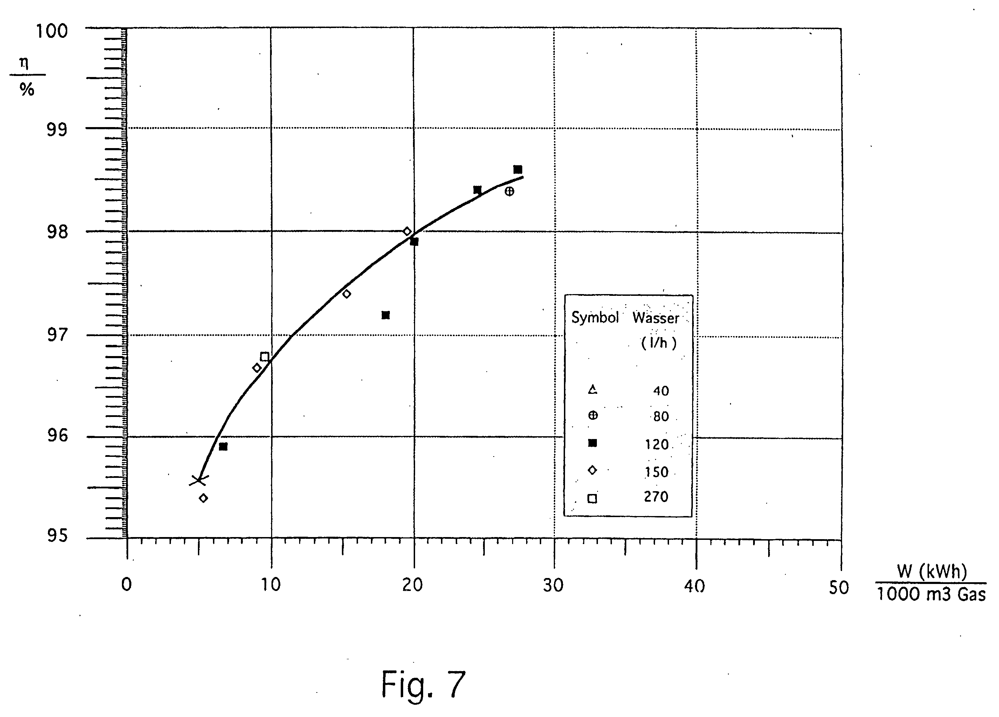

Fig. 7 zeigt wie die Abscheiderate mit der Hybriddüse bei Beaufschlagung mit einer bestimmten Wassermenge (40, 80,120, 150, 270 l/h) mit zunehmendem Energieeintrag W durch die Verdüsungsluft zunimmt. Die Abscheiderate. kann somit durch die Verdüsungsluftmenge, die zum Energieeintrag proportional ist, gesteuert werden. Der Druckabfall im Venturi betrug 0 mbar, das heißt der Venturispalt war weit geöffnet. Der Gasdurchsatz durch den Venturi im dargestellten Versuch betrug 120 m³/h, was zu etwas niedrigeren Abscheideleistungen führte als in Fig. 6. Der Staubgehalt im Rohgas betrug 250 mg/ m³ wie in Fig. 6.

### Beispiel 2:

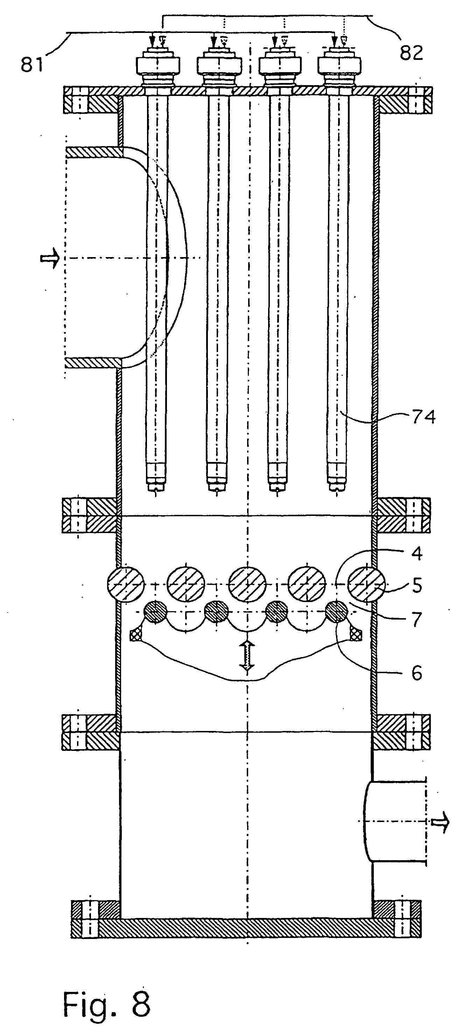

In den in Fig. 3 dargestellten Versuchsaufbau wird ein anderer Rohrspalt-Venturiwäscher, der für einen Gasdurchsatz von etwa 1000 m³/h ausgelegt ist und acht Venturikehlen aufweist statt des Venturi-Wäschers aus Beispiel 1 integriert. Dieser andere Wäscher ist in Fig. 8 dargestellt. Er weist anströmseitig vier Rohrspalte 4 (Primärspalte) auf, die durch fünf zylindrische Körper 5 gebildet werden. Unterhalb der Primärspalte sind vier Verdrängerkörper 6 angeordnet, so daß acht Venturispalte 7 gebildet werden. Die Verdrängerkörper sind auf einem Rohr gelagert, das mittels einer nicht dargestellten Gewindestange axial verschiebbar ist. Dadurch ist es möglich die insgesamt acht Venturispalte in ihrer Größe zu verändern und so den Druckverlust des Venturiwäschers einzustellen. Oberhalb der Primärspalten befinden sich vier Hybriddüsen 74, die im Druckbetrieb (nur mit Flüssigkeit) oder als Hybriddüsen betrieben werden können. Durch die Zuführungen 81 wird den Düsen die Waschflüssigkeit und durch die Zuführungen 82 wird den Hybriddüsen bei Bedarf die Druckluft zugeführt. Die Düsen haben ein fächerförmiges Sprühbild und bedecken die jeweils darunterliegende Primärspalte vollständig mit dem Sprüh. Der maximal einstellbare Druckverlust durch die Größenveränderung der Venturikehlen beträgt in diesem Venturi-Wäscher 23 mbar.

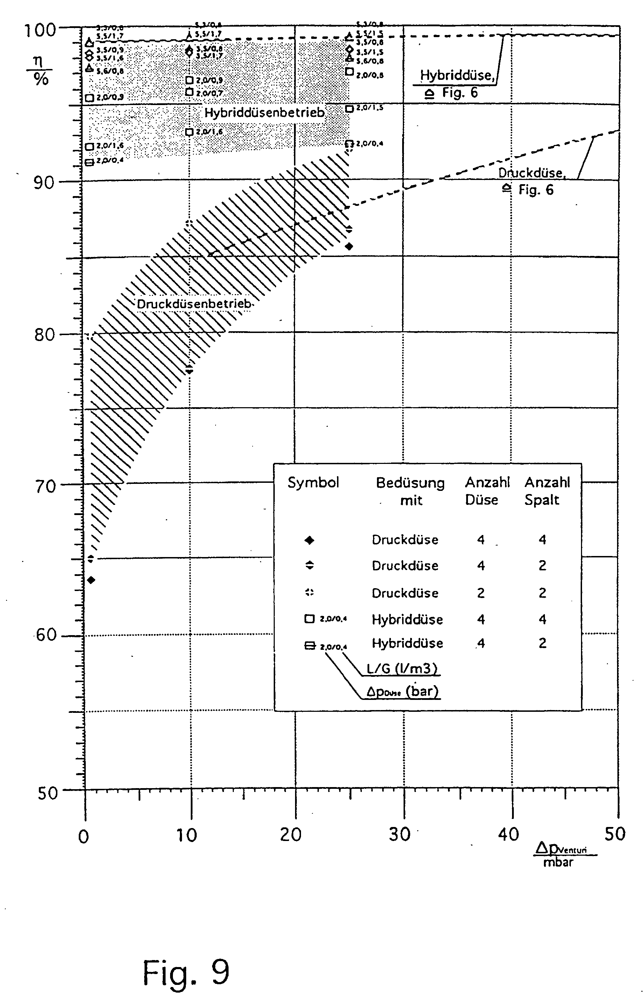

In Fig. 9 sind die Meßergebnisse als Abscheidegrad η in % über dem Venturi-Druckverlust aufgetragen, die im Druckdüsenbetrieb und im Hybriddüsenbetrieb mit dem in Fig. 8 dargestellten Venturi-Wäscher erzielt worden sind. Das Rohgas war mit 380 mg/m³ Staub beladen. Die Rohgasströme lagen bei 900 m³/h bis 1100 m³/h. Außerdem sind zum Vergleich als gestrichelte Linien die Ergebnisse eingetragen, die mit dem Venturi-Wäscher aus Beispiel 1 erreicht wurden.

Es zeigt sich in Fig. 9 dasselbe Verhalten wie in den Versuchen mit dem Venturi-Wascher aus Beispiel 1. Die Abscheideraten im Druckdüsenbetrieb (gestreifter Bereich) steigen mit zunehmendem Venturi-Druckverlust stark an. Diese Abhängigkeit ist unabhängig von der Zahl der verwendeten Düsen und Rohrspalten. Die höchsten Abscheideraten wurden beim Einsatz von zwei Düsen und zwei Spalten bei maximal möglichem Venturi-Druckverlust mit 92,2 % erzielt. Dabei betrug das Verhältnis von verdüster Flüssigkeit (L) zur Rohgasmenge (G) L/G=2,9 l/m³. Das heißt, es konnte ein mit 380 mg/m³ belastetes Rohgas bei einem Venturi-Druckverlust von 23 mbar auf 30 mg/m³ gereinigt werden. Die dabei in den beiden Düsen eingesetzte Wassermenge betrug 2900 l/ h bei 1000 m³/h Rohgasdurchsatz.

Im Hybriddüsenbetrieb wurde der Venturiwäscher mit vier Düsen und zwei oder vier Rohrspalten betrieben unter Variation des Verhältnisses von verdüster Flüssigkeit (L) zur Rohgasmenge (G) und bei verschiedenen Druckverlusten an den Düsen.

Es zeigt sich in Fig. 9 wie auch schon in Fig. 6, daß die Abscheiderate im Hybriddüsenbetrieb fast unabhängig vom Venturi-Druckverlust ist und insgesamt deutlich höher liegt als im Druckdüsenbetrieb. Die Messungen schließen sich nahtlos an die in Beispiel 1 durchgeführten Messungen an, die als gestrichelte Linie bei η=99 % dargestellt sind.

Weiterhin zeigen die Ergebnisse, daß die Abscheiderate an der Düse im Hybriddüsenbetrieb mit zunehmendem Düsendruck Δp_{Düse} zunimmt. Der Düsendruck wurde auf die Werte 2 bar, 3,5 bar, 5,3 bar, 5,5 bar und 5,6 bar eingestellt. Das Verhältnis von L/G wurde zwischen 0,4 und 1,7 l/m³ variiert und lag damit immer unter dem L/G=2,9 l/m³ im Druckdüsenbetrieb.

Mit den Hybriddüsen konnte ein mit 380 mg/m³ belastetes Rohgas bei 5,3 bar Düsenvordruck bei L/G=0,8 l/m³ und ohne Venturi-Druckverlust auf 3,8 mg/m³ gereinigt werden. Dabei wurde insgesamt eine Wassermenge von 800 l/h in den vier Düsen verbraucht bei 1000 m³/h Rohgasdurchsatz.

### Beispiel 3:

Mit dem Rohrspalt-Venturiwäscher wurde Abgas von SO₂ gereinigt.

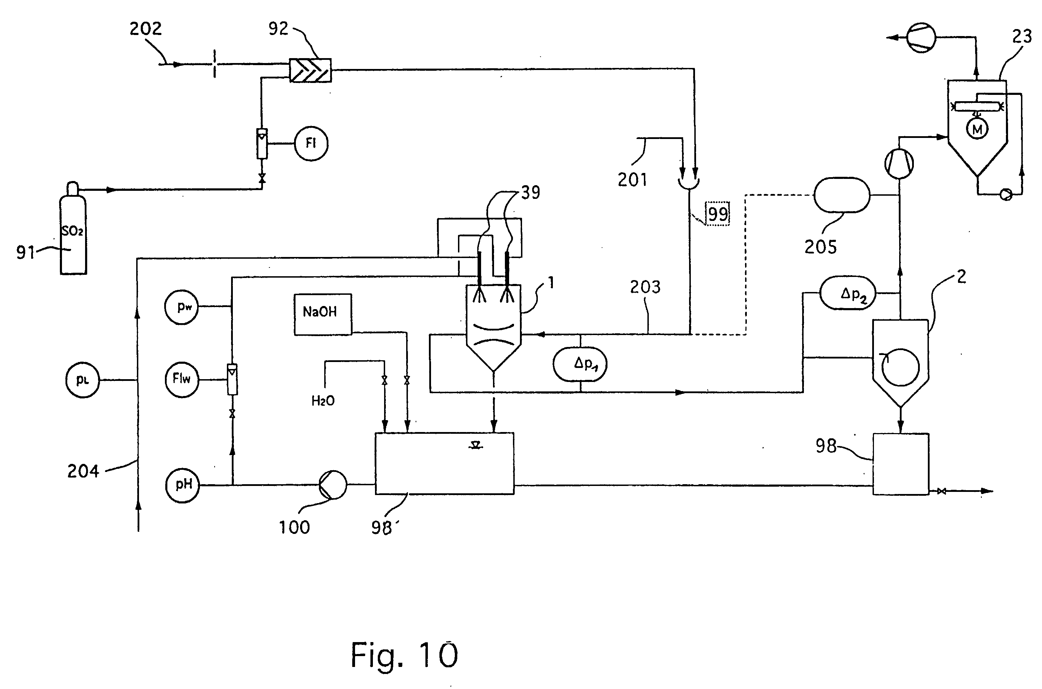

Fig. 10 zeigt das Fließschema einer Versuchsanlage mit dem für 1000 m³/h Abluft ausgelegten Rohrspalt-Venturi 1 aus Beispiel 2. Der Venturi-Wäscher 1 wird von einer aus Raumluft 201 und SO₂-haltiger Mischluft bestehenden synthetischen Abluft (SAL) durchströmt.

In einem Statikmischer 92 wird der Mischluft 202 aus dem Preßluftnetz SO₂ aus einer Druckgasflasche 91 zugemischt. Der Volumenstrom des SO₂ wird mittels eines Schwebekörper-Durchflußmessers F1 angezeigt. Die SO₂-haltige Mischluft strömt drucklos in die Zuleitung 99 des Venturiwäschers und vermischt sich in der Leitung 203 bis zum Eintritt in den Wäscher mit der Raumluft. Raumluft und SO₂-haltige Mischluft bilden die synthetische Abluft (SAL). Der SAL-Durchsatz und die SO₂-Konzentration werden bedarfsweise mittels Prandtl-Rohr und IR-Meßgerät (URAS 3E, Fa. Hartmann und Braun) 205 bestimmt. Die Volumenstrommessung erfolgt entsprechend den in DIN 2066 festgelegten Kriterien.

Aus dem Wäschersumpf 98' wird dic Absorptionslösung mit einer drehzahlgeregelten Pumpe 100 den Zerstäuberdüsen 39 im Kopf des Venturiwäschers zugeführt. Volumenstrom, pH-Werte und Druck werden kontinuierlich mit den Meßgeräten pH, Fl_{w}, und p_{w} gemessen. Der pH-Wert wird, falls erforderlich, durch Zugabe von NaOH-Lauge in einem für die Absorption günstigen Bereich gehalten. Für die Beaufschlagung der Düsen mit Luft wird Preßluft mit dem Druck P_{L} über die Zuleitung 204 zugeführt.

Nach der Bedüsung der SO₂-haltigen Raumluft im Venturiwäscher 1 gelangen die abgeschiedenen Flüssigkeitstropfen in den Absorbersumpf 98'. Auch die im Zyklon 2 abgeschiedene Flüssigkeit gelangt in den Absorbersumpf 98, der mit dem Absorbersumpf 98' in Verbindung steht. Das gereinigte Gas wird einem einstufigen Rotationswäscher 23 zugeführt, bevor es über das hauseigene Abluftsystem in die Atmosphäre abgegeben wird.

Der Venturidruckverlust wurde mit dem Meßgerät Δp₁ und der Druckverlust am Zyklon mit dem Meßgerät Δp₂ bestimmt.

Als Venturiwäscher 1 wurde der in Fig. 8 abgebildete Wäscher verwendet, wobei die beiden äußeren, rohrwandnahen Spalten abgedeckt waren. Die Bedüsung der beiden achsnahen Rohrspalte erfolgte entweder mit allen vier oder mit den zwei über den achsnahen Primärspalten installierten Düsen. Als Düsen wurden die Hybriddüsen und zum Vergleich kommerzielle Zweistoffdüsen (Fa. Lechler, Baureihe KSD, Größe 1x150.008 und 1x150.013) eingesetzt.

Bei den Zweistoffdüsen findet die Zerstäubung in zwei Phasen statt. Die zugeführte Flüssigkeit wird zunächste zentral mit einer Druckdüse unter Bildung eines Hohlkegels mit einem Sprühwinkel von 100⁰ zerstäubt. Die mit Drall aus einem nahe der Druckdüse angeordneten Ringspalt austretende Zerstäuberluft zerreißt vorzugsweise die größeren der mit Druckzerstäubung erzeugten Tropfen. Wird anstelle von Zerstäuberluft über den Ringspalt Wasser geleitet, treten aus dem Ringspalt entsprechend der Drallerzeugung durch die Schlitze acht Sprühstrahle auf. Jeder Einzelstrahl besteht im Kern aus bis zu 1 mm großen Tropfen und ist umgeben von einer Wolke kleinerer Tropfen. Der Winkel zwischen zwei gegenüberliegend austretenden Sprühstrahlen beträgt 40°. Bei gleichem Druckabfall an der Düse ergibt sich ein Verhältnis von zentral zerstäubtem Wasser zu verdüstem Ringspaltwasser von 1:4,5.

Die SO₂- Konzentration des Rohgases betrug vor dem Eintritt in den Venturiwäscher entweder 100 mg/m³ oder 500 mg/m³. Der Gesamtdurchsatz durch den Absorber betrug 1000 m³/h.

Die Hybriddüse erreichte bei beiden SO₂-Konzentrationen bei einem Düsendruck von 5,5 bar und einem Verhältnis von verdüster Flüssigkeit zur Rohgasmenge von L/G=0,9 l/ m³ und ohne Druckverlust im Venturiwäscher einen Abscheidegrad von 99 %. Die konventionelle Zweistoffdüse erreichte mit denselben Parametern und bei einer SO₂-Konzentratiom im Rohgas von 100 mg/m³ eine Abscheideleistung von 95,5 %.

Bei Druckverlusten im Venturi-Wäscher bis zu 23 mbar blieb die Abscheideleistung mit der Hybriddüse konstant. Mit der Zweistoffdüse schwankte sie zwischen 95,5 % und 93 %.

## Patentansprüche

1. Verfahren zur Reinigung eines Rohgasstroms mit Hilfe einer zerstäubten Waschflüssigkeit, bei dem der Rohgasstrom durch eine Hybriddüse, die bei konstanter Beaufschlagung mit einer bestimmten Flüssigkeitsmenge und einer bestimmten Luftmenge, diese Flüssigkeitsmengen und Luftmengen nicht gleichmäßig verdüst, sondern pulsierend den Betriebsmodus ständig wechselt, (41) mit der zerstäubten Waschflüssigkeit besprüht und anschließend mit einem Druckverlust bis 30 mbar, vorzugsweise bis 20 mbar, durch eine oder mehrere Venturikehlen (7) geleitet wird.

2. Verfahren nach Anspruch 1, **dadurch gekennzeichnet, daß** die Pulsationsfrequenz der Hybriddüse 5 bis 70 Hz, vorzugsweise 10 bis 20 Hz beträgt.

3. Vorrichtung zur Reinigung von Rohgas, insbesondere zur Durchführung des Verfahrens nach den Ansprüchen 1 bis 2, bestehend aus einem Strömungsrohr (43), wobei sich eine oder mehrere Venturikehlen (7) in dem Strömungsrohr (43) befinden und eine oder mehrere Hybriddüsen die bei konstanter Beaufschlagung mit einer bestimmten Flüssigkeitsmenge und einer bestimmten Luftmenge, diese Flüssigkeitsmengen und Luftmengen nicht gleichmäßig verdüsen, sondern pulsierend den Betriebsmodus ständig wechseln, (41) stromaufwärts der Venturikehlen angeordnet sind.

4. Vorrichtung nach Anspruch 3, **dadurch gekennzeichnet, daß** die Hybriddüse (41) aus einem ersten Resonanzraum (103), in den ein Flüssigkeitsverteilerohr (101) und die Zuführung (102) für ein Zerstäubungshilfsmittel mündet, und einem zweiten sich anschließenden Resonanzraum (105), der durch eine Blende (104) vom ersten Resonanzraum (103) getrennt ist, und einem auf den zweiten Resonanzraum folgenden Sprühkopf (107), der durch eine weitere Blende (106) vom zweiten Resonanzraum (105) getrennt ist, besteht.

5. Vorrichtung nach Anspruch 3 oder 4, **dadurch gekennzeichnet, daß** der Eintrittspunkt für Flüssigkeit in die erste Resonanzkammer (103) der Hybriddüse variabel einstellbar ist.

6. Vorrichtung nach einem der Ansprüche 3 bis 4, **dadurch gekennzeichnet, daß** die Hybriddüse (41) bezüglich ihres Abstands von der Venturikehle (7) einstellbar ist.

7. Vorrichtung nach einem der Ansprüche 3 bis 6, **dadurch gekennzeichnet, daß** die eine oder die mehreren Venturikehlen (7) durch mindestens zwei parallele Zylinder (5) gebildet werden, horizontal in einer Ebene nebeneinander angeordnet sind und jeder Kehle (7) jeweils mindestens eine Hybriddüse (41) zugeordnet ist.

8. Vorrichtung nach einem der Ansprüche 3 bis 7, **dadurch gekennzeichnet, daß** die Venrurikehlen durch parallele Zylinder (5) in Verbindung mit einem oder mehreren Verdrängerkörpem (6) gebildet werden, die stromabwärts der parallelen Zylinder (5) angeordnet sind.

9. Vorrichtung nach Anspruch 8, **dadurch gekennzeichnet, daß** der oder die Verdrängerkörper (6) axial beweglich sind.

## Claims

1. Method for cleaning a crude gas stream with the aid of an atomized scrubbing liquid, in which the crude gas stream is sprayed, by means of a hybrid nozzle (41), which, if constantly supplied with a specific amount of liquid and a specific amount of air, will not atomize these amounts of liquid and air uniformly, but instead, in a pulsating manner, continuously change its mode of operation, with the atomized scrubbing liquid and is then passed, with a pressure drop of up to 30 mbar, preferably up to 20 mbar, through one or more venturi throats (7).

2. Method according to Claim 1, **characterized in that** the pulsation frequency of the hybrid nozzle is from 5 to 70 Hz, preferably from 10 to 20 Hz.

3. Apparatus for cleaning crude gas, in particular for implementing the method according to Claims 1 and 2, comprising a flow tube (43), one or more venturi throats (7) being located in the flow tube (43), and one or more hybrid nozzles (41), which, if constantly supplied with a specific amount of liquid and a specific amount of air, will not atomize these amounts of liquid and air uniformly, but instead, in a pulsating manner, continuously change their mode of operation, being disposed upstream of the venturi throats.

4. Apparatus according to Claim 3, **characterized in that** the hybrid nozzle (41) consists of a first resonance chamber (103), debouching into which is a fluid distribution tube (101) and the feeder (102) for an atomization aid, and of a second, following resonance chamber (105) which is separated from the first resonance chamber (103) by a restrictor (104), and of a spray head (107) which follows the second resonance chamber and is separated from the second resonance chamber (105) by a further restrictor (106).

5. Apparatus according to Claim 3 or 4, **characterized in that** the entry point for liquid into the first resonance chamber (103) of the hybrid nozzle is variably adjustable.

6. Apparatus according to either of Claims 3 and 4, **characterized in that** the hybrid nozzle (41) is adjustable in terms of its distance from the venturi throat (7).

7. Apparatus according to any one of Claims 3 to 6, **characterized in that** the one or more venturi throats (7) are formed by at least two parallel cylinders (5), and are juxtaposed horizontally in a plane, and allocated to each throat (7) there is at least one hybrid nozzle (41) each.

8. Apparatus according to any one of Claims 3 to 7, **characterized in that** the venturi throats are formed by parallel cylinders (5) in conjunction with one or more displacers (6) which are disposed downstream of the parallel cylinders (5).

9. Apparatus according to Claim 8, **characterized in that** the displacer(s) (6) are axially movable.

## Revendications

1. Procédé pour épurer un courant de gaz brut au moyen d'un liquide de lavage pulvérisé, dans lequel le courant de gaz brut est pulvérisé au travers d'une buse hybride (41) qui, pour une alimentation constante avec une quantité de liquide déterminée et une quantité d'air déterminée, ne pulvérise pas régulièrement ces quantités de liquide et ces quantités d'air mais fait varier constamment le mode de fonctionnement de manière pulsée, avec le liquide de lavage pulvérisé après quoi il est amené à traverser un ou plusieurs cols venturi (7) avec une perte de charge pouvant atteindre 30 mbar, de préférence pouvant atteindre 20 mbar.

2. Procédé selon la revendication 1, **caractérisé en ce que** la fréquence de pulsation de la buse hybride est de 5 à 70 Hz, de préférence de 10 à 20 Hz.

3. Dispositif d'épuration de gaz brut, en particulier pour la mise en oeuvre du procédé selon les revendications 1 à 2, consistant en un tube d'écoulement (43), où un ou plusieurs cols venturi (7) se trouvent dans le tube d'écoulement (43) et une ou plusieurs buses hybrides (41), qui pour une alimentation constante avec une quantité de liquide déterminée et une quantité d'air déterminée, ne pulvérisent pas ces quantités de liquide et ces quantités d'air uniformément mais font varier constamment le mode de fonctionnement de manière pulsée, sont disposées en amont des cols venturi.

4. Dispositif selon la revendication 3, **caractérisé en ce que** la buse hybride (41) consiste en une première enceinte de résonance (103) dans laquelle débouchent un tube distributeur de liquide (101) et l'amenée (102) pour un auxiliaire de pulvérisation, et en une seconde enceinte de résonance (105) consécutive, qui est séparée de la première enceinte de résonance (103) par un diaphragme (104), et en une tête de pulvérisation (107) qui suit la seconde enceinte de résonance et qui est séparée de la seconde enceinte de résonance (105) par un autre diaphragme (106).

5. Dispositif selon la revendication 3 ou 4, **caractérisé en ce que** le point d'entrée pour le liquide dans la première chambre de résonance (103) de la buse hybride est réglable de manière variable.

6. Dispositif selon l'une quelconque des revendications 3 à 4, **caractérisé en ce que** la buse hybride (41) est réglable en ce qui concerne sa distance avec le col venturi (7).

7. Dispositif selon l'une quelconque des revendications 3 à 6, **caractérisé en ce que** le ou les cols venturi (7) sont formés par au moins deux cylindres parallèles (5), disposés côte à côte horizontalement dans un plan, et au moins une buse hybride (41) est associée à chaque col (7).

8. Dispositif selon l'une quelconque des revendications 3 à 7, **caractérisé en ce que** les cols venturi sont formés par des cylindres parallèles (5) en liaison avec une ou plusieurs chicanes (6) qui sont disposées en aval des cylindres parallèles (5).

9. Dispositif selon la revendication 8, **caractérisé en ce que** la ou les chicanes (6) sont déplaçables axialement.
